(19) Europäisches Patentamt
European Patent Office
Office européen des brevets

(11) **EP 4 538 571 A1**

(12) **EUROPEAN PATENT APPLICATION**
published in accordance with Art. 153(4) EPC

(43) Date of publication:
**16.04.2025 Bulletin 2025/16**

(21) Application number: 23819629.9

(22) Date of filing: **22.05.2023**

(51) International Patent Classification (IPC):
*F16K 31/04* (2006.01)    *H02K 37/14* (2006.01)
*H02P 8/24* (2006.01)    *F16K 37/00* (2006.01)

(52) Cooperative Patent Classification (CPC):
**F16K 31/04; F16K 37/00; H02K 37/14; H02P 8/24;**
Y02B 30/70

(86) International application number:
**PCT/JP2023/018927**

(87) International publication number:
**WO 2023/238645 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.06.2022 JP 2022093270**

(71) Applicant: **Fujikoki Corporation
Tokyo 158-0082 (JP)**

(72) Inventors:
• **OGIWARA, Kai**
  **Tokyo 158-0082 (JP)**
• **NARUKAWA, Bunta**
  **Tokyo 158-0082 (JP)**
• **HAGIMOTO, Hiroshi**
  **Tokyo 158-0082 (JP)**
• **YOSHIDA, Tatsuya**
  **Tokyo 158-0082 (JP)**

(74) Representative: **Ter Meer Steinmeister & Partner
Patentanwälte mbB
Artur-Ladebeck-Strasse 51
33617 Bielefeld (DE)**

(54) **ELECTRIC VALVE CONTROL DEVICE AND ELECTRIC VALVE DEVICE**

(57)    [Object] To provide an electric valve control device and an electric valve device that are capable of detecting in a relatively simple way that rotation of a magnet rotor is restricted.

[Solution] An electric valve control device controls an electric valve. The electric valve includes a first magnetic sensor (91) and a second magnetic sensor (92). Output signals of the first magnetic sensor (91) and the second magnetic sensor (92) are each a binary signal. Where n represents the total number of north poles and south poles of a magnet rotor (31), N represents a natural number, and θ represents an angle between a line (M1) connecting an axis (L) to the first magnetic sensor (91) and a line (M2) connecting the axis (L) to the second magnetic sensor (92), the following expression (1) is satisfied.

$$(1) \quad \theta = (360/n) \times N + (360/2n)$$

The electric valve control device is configured to detect that the rotation of the magnet rotor (31) is restricted using the output signals and output-signal expected value information.

**(Cont. next page)**

FIG.6

NORTH POLE
SOUTH POLE

**Description**

Technical Field

The present invention relates to an electric valve control device and an electric valve device including an electric valve and the electric valve control device.

Background Art

Patent Literature 1 discloses an example of an electric valve according to the related art. For example, the electric valve is installed in an air conditioner system. The electric valve includes a case, a rotor, a stator, and a Hall IC. The rotor is disposed inside the case. The rotor includes a drive magnet drum and a detection magnet drum. The stator is disposed outside the case. The rotor and the stator are members of a stepping motor. The Hall IC is disposed outside the case. An output signal of the Hall IC is a signal (a binary signal) corresponding to the magnetic field generated by the detection magnet drum.

Citation List

Patent Literature

Patent Literature 1: Japanese Unexamined Patent Application Publication 2003-329698

Summary of Invention

Technical Problem

The electric valve is controlled by an air conditioner control device. In an initialization of the electric valve, the air conditioner control device inputs pulses to the stepping motor to rotate the rotor in a specific direction. When the rotor reaches a reference position, a stopper mechanism restricts the rotation of the rotor in the specific direction. Upon a change in the output signal of the Hall IC, the air conditioner control device starts counting pulses. The air conditioner control device uses a flag, set and reset according to the count of pulses, to detect that the rotation of the rotor in the specific direction is restricted. In other words, the air conditioner control device detects that the rotor reaches the reference position. Consequently, the air conditioner control device executes a complex process.

Accordingly, it is an object of the present invention to provide an electric valve control device and an electric valve device that are capable of detecting in a relatively simple way that rotation of a magnet rotor is restricted. Solution to Problem

To achieve the object above, an electric valve control device according to one aspect of the present invention is an electric valve control device for controlling an electric valve.

The electric valve includes a valve body that has a valve port, a valve member that faces the valve port, a can that is bonded to the valve body, a stepping motor for moving the valve member, and a first magnetic sensor and a second magnetic sensor that are disposed outside the can.

The stepping motor includes a magnet rotor that has a circular cylindrical shape and is disposed inside the can and a stator that is disposed outside the can.

North poles and south poles are alternately arranged on an outer circumferential surface of the magnet rotor at regular intervals in a circumferential direction.

Where n represents a total number of the north poles and the south poles, N represents a natural number, and $\theta$ represents an angle, as viewed in a direction of an axis of the magnet rotor, between a line connecting the axis to the first magnetic sensor and a line connecting the axis to the second magnetic sensor, a following expression (1) is satisfied.

$$(1) \quad \theta = (360/n) \times N + (360/2n)$$

An output signal of the first magnetic sensor and an output signal of the second magnetic sensor are each a binary signal.

The electric valve control device is configured to detect that rotation of the magnet rotor is restricted using the output signal of the first magnetic sensor and the output signal of the second magnetic sensor and output-signal expected value information that serves as expected values of the output signal of the first magnetic sensor and the output signal of the second magnetic sensor while the magnet rotor rotates.

In the present invention, preferably, the electric valve control device is configured to detect rotation direction of the magnet rotor using timing when the output signal of the first magnetic sensor changes from a first value to a second value and timing when the output signal of the second magnetic sensor changes from the first value to the second value.

To achieve the object above, an electric valve control device according to another aspect of the present invention is an electric valve control device for controlling an electric valve.

The electric valve includes a valve body that has a valve port, a valve member that faces the valve port, a can that is bonded to the valve body, a stepping motor for moving the valve member, and a first magnetic sensor and a second magnetic sensor that are disposed outside the can.

The stepping motor includes a magnet rotor that has a circular cylindrical shape and is disposed inside the can and a stator that is disposed outside the can.

North poles and south poles are alternately arranged on an outer circumferential surface of the magnet rotor at regular intervals in a circumferential direction.

The electric valve control device is configured to detect position and rotation direction of the magnet rotor using an output signal of the first magnetic sensor and an output signal of the second magnetic sensor.

To achieve the object above, an electric valve device according to still another aspect of the present invention includes the electric valve and the electric valve control device.

Advantageous Effects of Invention

According to the present invention, where n represents the total number of the north poles and the south poles of the magnet rotor, N represents a natural number, and θ represents the angle, as viewed in the direction of the axis of the magnet rotor, between the line connecting the axis to the first magnetic sensor and the line connecting the axis to the second magnetic sensor, the following expression (1) is satisfied.

$$(1) \quad \theta = (360/n) \times N + (360/2n)$$

Consequently, when one of the first and second magnetic sensors faces one magnetic pole provided on the outer circumferential surface of the magnet rotor, the other faces a portion between magnetic poles in the outer circumferential surface of the magnet rotor. The output signals of the first and second magnetic sensors are each a binary signal.

The electric valve control device is configured to detect that the rotation of the magnet rotor is restricted using the output signals of the first and second magnetic sensors and the output-signal expected value information that serves as the expected values of the output signals while the magnet rotor rotates.

With this configuration, the electric valve control device can determine whether the magnet rotor is rotating by comparing the output signals of the first and second magnetic sensors and the output-signal expected value information that serves as the expected values of the output signals. Therefore, it can be detected in a relatively simple way that the rotation of the magnet rotor is restricted, based on the determination of the rotation of the magnet rotor.

Brief Description of Drawings

[Fig. 1] Fig.1 is a block diagram of an air conditioner system including an electric valve device according to an embodiment of the present invention.
[Fig. 2] Fig. 2 is a sectional view of the electric valve device.
[Fig. 3] Fig. 3 is a sectional view of a stator unit.
[Fig. 4] Fig. 4 is a perspective view of a sensor circuit board and a circuit-board supporting member.
[Fig. 5] Fig. 5 is another perspective view of the sensor circuit board and the circuit-board supporting member.
[Fig. 6] Fig. 6 is a diagram illustrating an arrangement of first and second magnetic sensors.
[Fig. 7] Fig. 7 is a diagram schematically illustrating a positional relationship between pole teeth of a stator and the first and second magnetic sensors.
[Fig. 8] Fig. 8 is a perspective view of a control circuit board.
[Fig. 9] Fig. 9 is a diagram illustrating a microcomputer, a stepping motor, and the first and second magnetic sensors.
[Fig. 10] Fig. 10 is a diagram schematically illustrating a positional relationship between a magnet rotor and the stator (when pulse P[1] is input).
[Fig. 11] Fig. 11 is a diagram schematically illustrating the positional relationship between the magnet rotor and the stator (when pulse P[2] is input).
[Fig. 12] Fig. 12 is a diagram schematically illustrating the positional relationship between the magnet rotor and the stator (when pulse P[3] is input).
[Fig. 13] Fig. 13 is a diagram schematically illustrating the positional relationship between the magnet rotor and the stator (when pulse P[4] is input).

[Fig. 14] Fig. 14 is a diagram schematically illustrating the positional relationship between the magnet rotor and the stator (when pulse P[5] is input).

[Fig. 15] Fig. 15 is a diagram schematically illustrating the positional relationship between the magnet rotor and the stator (when pulse P[6] is input).

[Fig. 16] Fig. 16 is a diagram schematically illustrating the positional relationship between the magnet rotor and the stator (when pulse P[7] is input).

[Fig. 17] Fig. 17 is a diagram schematically illustrating the positional relationship between the magnet rotor and the stator (when pulse P[8] is input).

[Fig. 18] Fig. 18 is a diagram illustrating an example of output-signal expected value information of the first and second magnetic sensors.

[Fig. 19] Fig. 19 is a diagram illustrating an example of the output-signal expected value information of the first and second magnetic sensors and output signals of the first and second magnetic sensors.

[Fig. 20] Fig. 20 is a diagram illustrating movement of the magnet rotor in a state where rotation of the magnet rotor in a valve closing direction is restricted.

[Fig. 21] Fig. 21 is a diagram illustrating the movement of the magnet rotor in the state where the rotation of the magnet rotor in the valve closing direction is restricted (following the diagram in Fig. 20).

[Fig. 22] Fig. 22 is a flowchart illustrating an example of a process of the electric valve control device. Description of Embodiments

An electric valve device according to an embodiment of the present invention is described below with reference to figures.

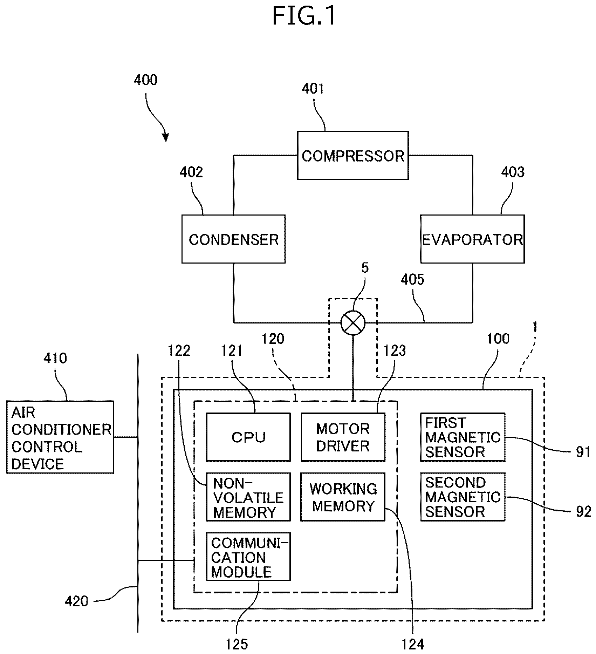

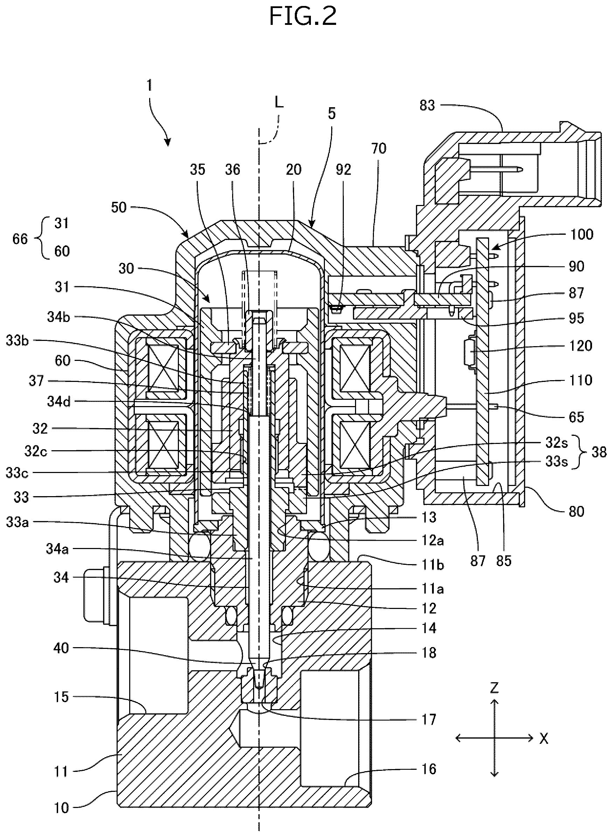

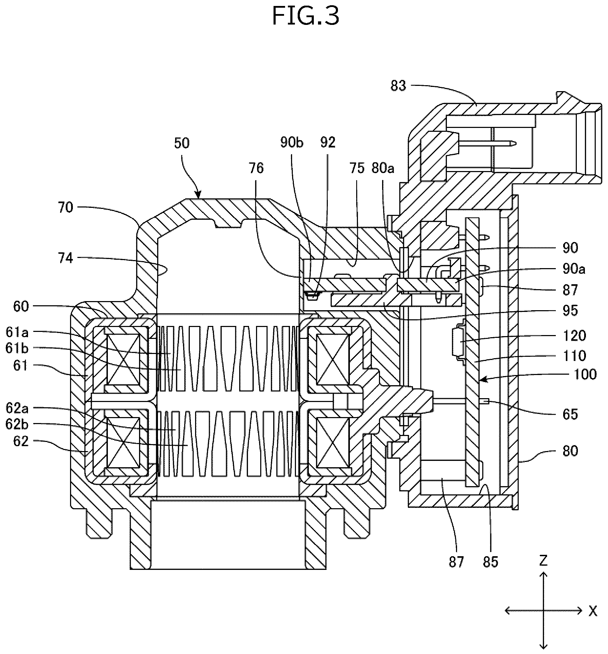

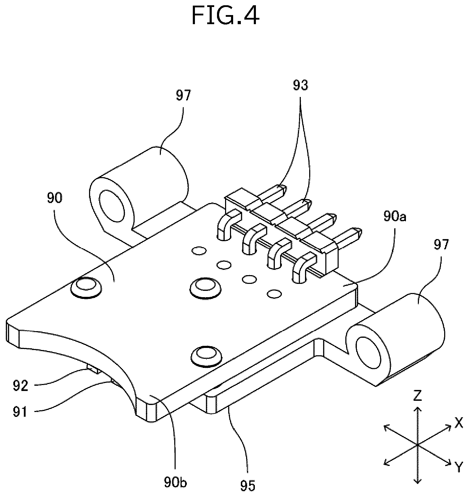

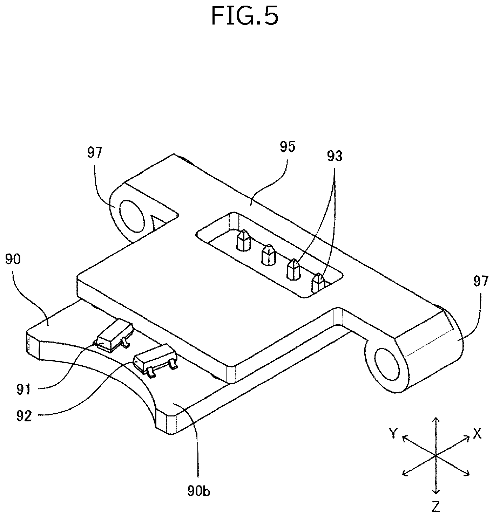

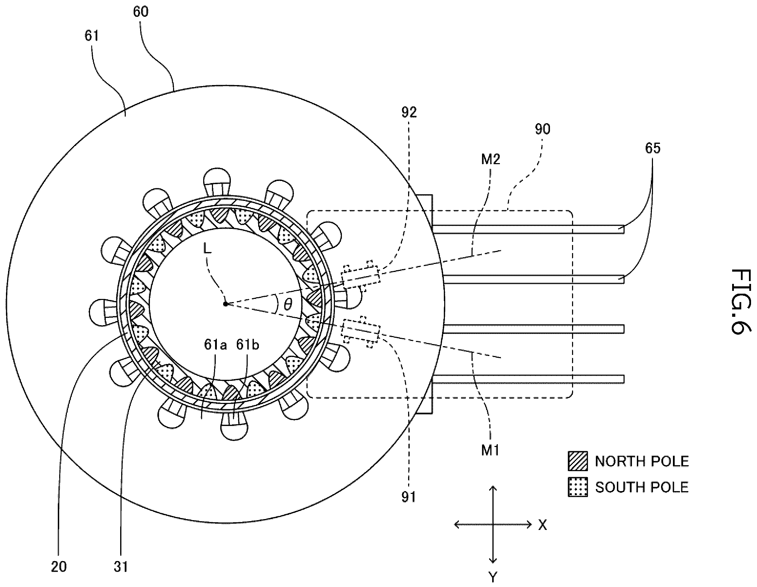

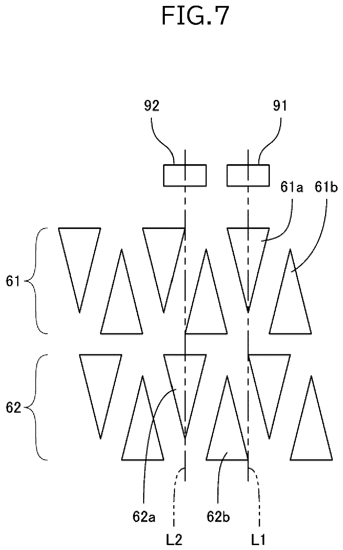

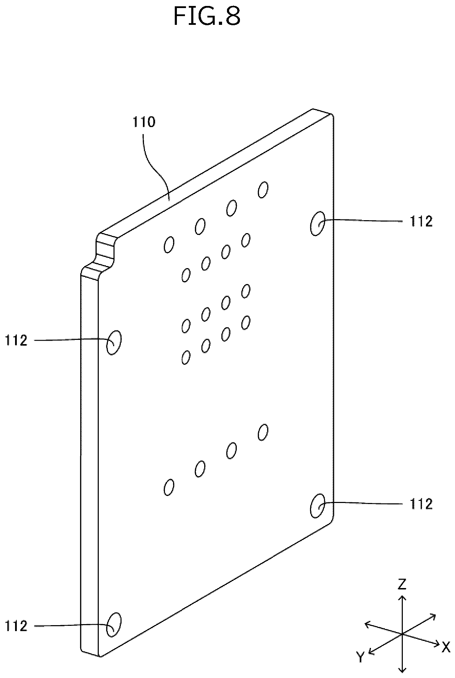

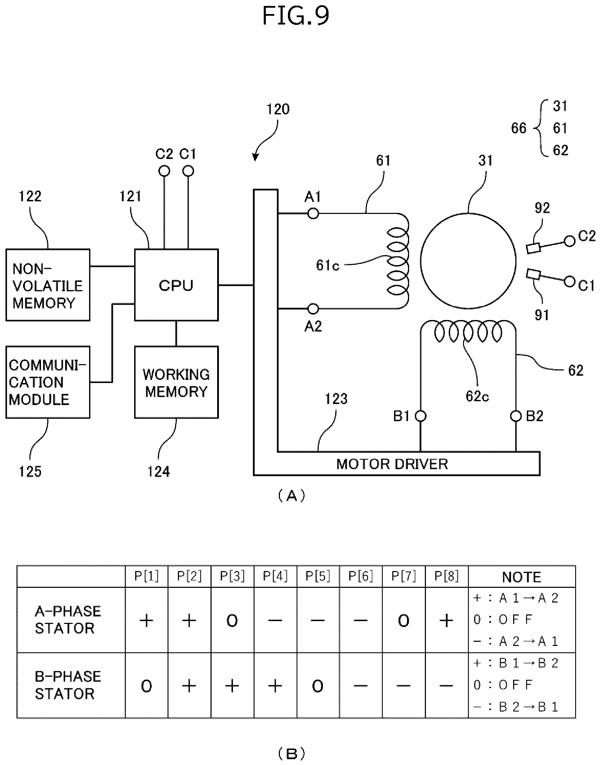

Fig.1 is a block diagram of an air conditioner system including the electric valve device according to the embodiment of the present invention. Fig. 2 is a sectional view of the electric valve device including an electric valve and an electric valve control device. Fig. 3 is a sectional view of a stator unit of the electric valve. Figs. 4 and 5 are perspective views of a sensor circuit board and a circuit-board supporting member that are included in the electric valve. Fig. 6 is a diagram illustrating an arrangement of first and second magnetic sensors of the electric valve. Fig. 6 shows a can, a magnet rotor, a stator, the sensor circuit board, and the first and second magnetic sensors viewed from above. In Fig. 6, the can and the magnet rotor are illustrated in sections cut along a plane that includes an upper surface of the stator, and the sensor circuit board and the first and second magnetic sensors are represented in dashed lines. In Fig. 6, hatched areas schematically represent north poles of the magnet rotor, and dotted areas schematically represent south poles of the magnet rotor. Fig. 7 is a diagram schematically illustrating a positional relationship between pole teeth of the stator and the first and second magnetic sensors that are included in the electric valve. Fig. 8 is a perspective view of a control circuit board of the electric valve control device. Fig. 9 is a diagram illustrating a microcomputer, a stepping motor, and the first and second magnetic sensors. Fig. 9A schematically illustrates a connection relationship between the microcomputer, the stepping motor, and the first and second magnetic sensors. Fig. 9B illustrates an example of pulses input to the stepping motor. In Figs. 2 to 6 and 8, an X direction indicated by arrow X represents a left-and-right direction, a Y direction indicated by arrow Y represents a front-and-back direction, and a Z direction indicated by arrow Z represents an up-and-down direction. The direction denoted by "X" on arrow X is a right direction, the direction denoted by "Y" on arrow Y is a front direction, and the direction denoted by "Z" on arrow Z is an upward direction.

An electric valve device 1 according to the embodiment includes an electric valve 5 and the electric valve control device. The electric valve control device is simply referred to as "a control device 100".

For example, the electric valve device 1 is installed in an air conditioner system 400 illustrated in Fig. 1. The air conditioner system 400 includes a compressor 401, a condenser 402, the electric valve device 1 (the electric valve 5), and an evaporator 403, which are connected in this order by a pipe 405. The air conditioner system 400 includes an air conditioner control device 410. The air conditioner control device 410 is connected to the electric valve device 1 (the control device 100) via a communication bus 420 and is able to communicate with the electric valve device 1. The air conditioner control device 410 utilizes the electric valve device 1 to control the flow rate of refrigerant flowing through the pipe 405.

As illustrated in Figs. 2 to 5, the electric valve 5 includes a valve body 10, a can 20, a driving mechanism 30, a valve member 40, a stator unit 50, a sensor circuit board 90, a first magnetic sensor 91, and a second magnetic sensor 92.

The valve body 10 is, for example, made of a metal, such as an aluminum alloy. The valve body 10 includes a body member 11, a supporting member 12, and a connection member 13. The body member 11 has a rectangular parallelepiped shape. The body member 11 has a mounting hole 11a. The mounting hole 11a is provided in an upper surface 11b of the body member 11. The supporting member 12 has a circular cylindrical shape. The lower part of the supporting member 12 is disposed in the mounting hole 11a. The supporting member 12 is mounted on the body member 11 by a screw structure. The upper part of the supporting member 12 projects from the upper surface 11b of the body member 11. The body member 11 has a valve chamber 14, flow channels 15 and 16, a valve port 17, and a valve seat 18. The flow channel 15 is connected to the valve chamber 14. The flow channel 16 is connected to the valve chamber 14 through the valve port 17. The valve seat 18 encloses the valve port 17 in the valve chamber 14. The connection member 13 has a circular annular plate-like shape. The upper part of the supporting member 12 is bonded to the inner peripheral edge of the connection member 13.

The can 20 is, for example, made of a metal, such as stainless steel. The can 20 has a circular cylindrical shape. The can 20 is closed at the upper end and is open at the lower end. The lower end of the can 20 is bonded to the outer peripheral edge of the connection member 13.

The driving mechanism 30 moves the valve member 40 in the up-and-down direction (a direction of an axis L). The driving mechanism 30 includes a magnet rotor 31, a valve stem holder 32, a guide bush 33, and a valve stem 34.

The magnet rotor 31 has a circular cylindrical shape. The outer diameter of the magnet rotor 31 is slightly smaller than the inner diameter of the can 20. The magnet rotor 31 includes magnetic poles (north (N) poles and south (S) poles). The N poles and the S poles are disposed on the outer circumferential surface of the magnet rotor 31. The N poles and the S poles extend in the up-and-down direction. The N poles and the S poles are alternately arranged at regular intervals in the circumferential direction. In the embodiment, the magnet rotor 31 has twelve N poles and twelve S poles, and the total number of the magnetic poles is 24. The interval (the angle) between the N pole and the S pole adjacent to each other is 15 degrees.

The valve stem holder 32 has a circular cylindrical shape. The valve stem holder 32 is closed at the upper end and is open at the lower end. A supporting ring 35 is secured to the upper part of the valve stem holder 32. The valve stem holder 32 is coupled to the magnet rotor 31 via the supporting ring 35. The valve stem holder 32 rotates together with the magnet rotor 31. The inner circumferential surface of the valve stem holder 32 has an internal thread 32c.

The guide bush 33 integrally includes a first circular cylindrical portion 33a and a second circular cylindrical portion 33b. The outer diameter of the second circular cylindrical portion 33b is smaller than that of the first circular cylindrical portion 33a. The second circular cylindrical portion 33b is coaxially connected to the upper end of the first circular cylindrical portion 33a. The outer circumferential surface of the second circular cylindrical portion 33b has an external thread 33c. The external thread 33c is screwed into the internal thread 32c of the valve stem holder 32. The first circular cylindrical portion 33a is press-fitted into a fitting hole 12a provided in the supporting member 12 of the valve body 10. The guide bush 33 is joined to the valve body 10.

A movable stopper 32s is secured to the valve stem holder 32. A fixed stopper 33s is secured to the first circular cylindrical portion 33a of the guide bush 33. When the movable stopper 32s comes into contact with the fixed stopper 33s, rotation of the valve stem holder 32 (i.e., the magnet rotor 31) in a valve closing direction is restricted. The movable stopper 32s and the fixed stopper 33s are members of a stopper mechanism 38. The stopper mechanism 38 restricts rotation of the magnet rotor 31 in the valve closing direction.

The valve stem 34 integrally includes a first part 34a and a second part 34b. The first part 34a and the second part 34b each have a circular columnar shape. The diameter of the second part 34b is smaller than that of the first part 34a. The second part 34b is coaxially connected to the upper end of the first part 34a. The second part 34b extends through the valve stem holder 32. A push nut 36 as a retainer is mounted on the second part 34b. The valve stem 34 is disposed inside both the guide bush 33 and the supporting member 12. The lower end of the first part 34a is disposed in the valve chamber 14. The valve stem 34 has a step portion 34d. The step portion 34d is disposed in the part where the second part 34b is connected to the first part 34a. A valve closing spring 37 is disposed between the step portion 34d and the valve stem holder 32. The valve closing spring 37 is a compression coil spring. The valve closing spring 37 pushes the valve stem 34 downward.

The valve member 40 is disposed in the valve chamber 14. The valve member 40 faces the valve port 17 in the up-and-down direction. The valve member 40 opens and closes the valve port 17. The valve member 40 is connected to the lower end of the valve stem 34. For example, the valve stem 34 and the valve member 40 are integrally formed by cutting a workpiece with a circular columnar shape.

The stator unit 50 includes a stator 60, a housing 70, and a case 80.

The stator 60 has a circular cylindrical shape. The stator 60 includes an A-phase stator 61 and a B-phase stator 62.

The A-phase stator 61 includes a plurality of claw-pole type pole teeth 61a and 61b in the inner circumference. The tip ends of the pole teeth 61a point downward, and the tip ends of the pole teeth 61b point upward. The pole teeth 61a and the pole teeth 61b are alternately arranged at regular intervals in the circumferential direction. In the embodiment, the A-phase stator 61 includes twelve pole teeth 61a and twelve pole teeth 61b. The angle between the pole tooth 61a and the pole tooth 61b adjacent to each other is 15 degrees. When a coil 61c of the A-phase stator 61 is energized, the pole teeth 61a and the pole teeth 61b have opposite polarities.

The B-phase stator 62 includes a plurality of claw-pole type pole teeth 62a and 62b in the inner circumference. The tip ends of the pole teeth 62a point downward, and the tip ends of the pole teeth 62b point upward. The pole teeth 62a and the pole teeth 62b are alternately arranged at regular intervals in the circumferential direction. In the embodiment, the B-phase stator 62 includes twelve pole teeth 62a and twelve pole teeth 62b. The angle between the pole tooth 62a and the pole tooth 62b adjacent to each other is 15 degrees. When a coil 62c of the B-phase stator 62 is energized, the pole teeth 62a and the pole teeth 62b have opposite polarities.

The A-phase stator 61 is disposed coaxially with the B-phase stator 62. The A-phase stator 61 is in contact with the B-phase stator 62. When viewed in the direction of the axis L, the angle between the pole tooth 61a of the A-phase stator 61 and the pole tooth 62a of the B-phase stator 62 adjacent to each other is 7.5 degrees. The coil 61c of the A-phase stator 61 and the coil 62c of the B-phase stator 62 are connected to terminals 65.

The housing 70 is made of synthetic resin. The housing 70 has a circular cylindrical shape. The housing 70 is formed by injection molding. The housing 70 houses the stator 60. The housing 70 is formed by integrally molding (insert molding) with the stator 60. The stator 60 and the housing 70 may be manufactured separately, and the stator 60 may be fitted into the housing 70. The can 20 is disposed in an inner space 74 that is defined by the inner surface of the housing 70 and the inner circumferential surface of the stator 60. The stator 60 and the magnet rotor 31 are members of a stepping motor 66.

The housing 70 has a circuit board space 75. The circuit board space 75 extends in a lateral direction (a direction perpendicular to the axis L). The circuit board space 75 is situated adjacent to the inner space 74. A partition wall 76 is placed between the inner space 74 and the circuit board space 75. The partition wall 76 separates the circuit board space 75 from the inner space 74. The cross section (a section perpendicular to the axis L) of the partition wall 76 has an arc shape along with the outer circumferential surface of the can 20.

The case 80 is made of synthetic resin. The case 80 has a rectangular parallelepiped box shape. The case 80 is bonded to the housing 70. A space 85 is provided inside the case 80 and is connected to the circuit board space 75 through an opening 80a. A connector 83 is provided in the upper part of the case 80.

Figs. 4 and 5 illustrate the sensor circuit board 90. The sensor circuit board 90 is a printed circuit board on which electronic components are mounted. The sensor circuit board 90 is housed in the circuit board space 75. The sensor circuit board 90 is positioned in the lateral direction. A first end 90a of the sensor circuit board 90 is disposed in the space 85 of the case 80. A second end 90b of the sensor circuit board 90 is disposed near the partition wall 76. A circuit-board supporting member 95 is mounted on the sensor circuit board 90. The circuit-board supporting member 95 includes circular cylindrical portions 97 in which bosses 87 of the case 80 are disposed, and the sensor circuit board 90 is mounted on the bosses 87 via the circuit-board supporting member 95. The first magnetic sensor 91 and the second magnetic sensor 92 are mounted on the sensor circuit board 90.

The first magnetic sensor 91 and the second magnetic sensor 92 are Hall-ICs. Output signals K (K1 and K2) of the first magnetic sensor 91 and the second magnetic sensor 92 are each a binary signal. The first magnetic sensor 91 and the second magnetic sensor 92 are disposed in the second end 90b of the sensor circuit board 90. The first magnetic sensor 91 and the second magnetic sensor 92 are positioned at equal distances from the axis L and arranged around the axis L with a gap between them.

The first magnetic sensor 91 and the second magnetic sensor 92 are each radially positioned relative to the magnet rotor 31 with the can 20 and the partition wall 76 in between. In other words, the first magnetic sensor 91 and the second magnetic sensor 92 each radially (laterally) face the magnet rotor 31 with the can 20 and the partition wall 76 in between.

Fig. 6 illustrates an example of an arrangement of the first magnetic sensor 91 and the second magnetic sensor 92. In Fig.6, a line M1 connects the axis L and a magnetic sensing section of the first magnetic sensor 91, and a line M2 connects the axis L and a magnetic sensing section of the second magnetic sensor 92. The lines M1 and M2 intersect the axis L at right angles. Where n represents the number of the magnetic poles of the magnet rotor 31, N represents a natural number, and θ represents an angle, as viewed in the direction (the direction of the axis L) of the axis of the magnet rotor 31, between the lines M1 and M2, the following expression (1) is satisfied.

$$(1)\ \theta = (360/n) \times N + (360/2n),$$

In the embodiment, n = 24, N = 1, and θ = 22.5 degrees.

$$(1a)\ \theta = (360/24) \times 1 + (360/(2\times24)) = 22.5$$

An acceptable alternative is n = 24, N = 3, and θ = 52.5 degrees.

$$(1b)\ \theta = (360/24) \times 3 + (360/(2\times24)) = 52.5$$

Another acceptable alternative is n = 24, N = 6, and θ = 97.5 degrees.

$$(1c)\ \theta = (360/24) \times 6 + (360/(2\times24)) = 97.5$$

Yet another acceptable alternative is n = 30, N = 2, and θ = 30 degrees.

$$(1d) \quad \theta = (360/30) \times 2 + (360/(2 \times 30)) = 30$$

In a configuration in which the expression (1) is satisfied, when the first magnetic sensor 91 radially faces one of the magnetic poles (the N and S poles) of the magnet rotor 31, the second magnetic sensor 92 radially faces a portion of the outer circumferential surface between the N pole and the S pole of the magnet rotor 31. Alternatively, when the second magnetic sensor 92 radially faces one of the magnetic poles (the N and S poles) of the magnet rotor 31, the first magnetic sensor 91 radially faces a portion of the outer circumferential surface between the N pole and the S pole of the magnet rotor 31. In a configuration in which the first magnetic sensor 91 and the second magnetic sensor 92 are positioned so that the output signal K1 of the first magnetic sensor 91 and the output signal K2 of the second magnetic sensor 92 change at different timings, it is not necessary to satisfy the expression (1).

Fig. 7 illustrates an example of a positional relationship between the A-phase stator 61, the B-phase stator 62, the first magnetic sensor 91, and the second magnetic sensor 92. As illustrated in Fig. 7, when the A-phase stator 61 and the B-phase stator 62 are viewed in the radial direction, the center of the pole tooth 61a of the A-phase stator 61 and the magnetic sensing section of the first magnetic sensor 91 are positioned on a line L1, and the center of the pole tooth 62a of the B-phase stator 62 and the magnetic sensing section of the second magnetic sensor 92 are positioned on a line L2. The lines L1 and L2 are parallel to the axis L.

The output signals K of the first magnetic sensor 91 and the second magnetic sensor 92 correspond to the direction of the magnetic field generated by the magnetic poles of the magnet rotor 31. Specifically, the first magnetic sensor 91 and the second magnetic sensor 92 each output an L signal (a first value) when detecting the S pole and an H signal (a second value) when detecting the N pole, as the output signals K.

In the electric valve 5, the respective central axes of the body member 11 (the valve port 17 and the valve seat 18), the supporting member 12, the connection member 13, the can 20, the magnet rotor 31, the valve stem 34, the valve member 40, and the stator 60 (the A-phase stator 61 and the B-phase stator 62) are aligned with the axis L.

In the electric valve 5, when the magnet rotor 31 rotates in the valve closing direction, the screw-feed action of the internal thread 32c of the valve stem holder 32 and the external thread 33c of the guide bush 33 moves the magnet rotor 31 and the valve stem holder 32 downward. The valve stem holder 32 pushes the valve stem 34 downward via the valve closing spring 37. The valve stem 34 and the valve member 40 move downward, and the valve member 40 comes into contact with the valve seat 18. At this time, the magnet rotor 31 is at a valve closing position Rc. When the magnet rotor 31 at this position further rotates in the valve closing direction, the valve closing spring 37 is compressed, and the magnet rotor 31 and the valve stem holder 32 further move downward. The valve member 40 does not move downward. When the movable stopper 32s comes into contact with the fixed stopper 33s, the rotation of the magnet rotor 31 in the valve closing direction is restricted. At this time, the magnet rotor 31 is at a reference position Rx.

In the electric valve 5, when the magnet rotor 31 rotates in a valve opening direction, the screw-feed action of the internal thread 32c of the valve stem holder 32 and the external thread 33c of the guide bush 33 moves the magnet rotor 31 and the valve stem holder 32 upward. The valve stem holder 32 pushes the push nut 36 upward. The valve stem 34 and the valve member 40 move upward, and the valve member 40 moves away from the valve seat 18. When the magnet rotor 31 further rotates in the valve opening direction, the magnet rotor 31 reaches a full-open position Rz. When the magnet rotor 31 is at the full-open position Rz, the valve member 40 is positioned farthest from the valve port 17.

The control device 100 includes a control circuit board 110 and a microcomputer 120.

Fig. 8 illustrates the control circuit board 110. The control circuit board 110 is a printed circuit board on which electronic components are mounted. The control circuit board 110 is housed in the space 85 of the case 80. The control circuit board 110 is positioned in the up-and-down direction. The control circuit board 110 is at a right angle to the sensor circuit board 90. The control circuit board 110 is disposed near the first end 90a of the sensor circuit board 90. The control circuit board 110 is connected to the sensor circuit board 90 via connecting terminals 93. The terminals 65 of the stator 60 are connected to the control circuit board 110. The bosses 87 of the case 80 are disposed in through holes 112 of the control circuit board 110, and the control circuit board 110 is mounted on the bosses 87. The microcomputer 120 is mounted on the control circuit board 110.

As illustrated in Figs. 1 and 9A, the microcomputer 120 is, for example, a microcomputer for embedded device in which a central processing unit (a CPU 121), a non-volatile memory 122, a motor driver 123, a working memory 124, a communication module 125, and the like are integrated into one package. The microcomputer 120 controls the electric valve 5. A non-volatile memory, a working memory, a communication module, and a motor driver may be separate electronic components that are externally connected to the microcomputer 120.

The CPU 121 executes a program stored in the non-volatile memory 122 to function as various function units. The working memory 124 stores variables used by the various function units. The communication module 125 is connected to the air conditioner control device 410 via the communication bus 420. The motor driver 123 is connected to the stepping motor 66. Specifically, as illustrated in Fig. 9A, the motor driver 123 is connected to the coil 61c of the A-phase stator 61 and the coil 62c of the B-phase stator 62. The motor driver 123 supplies driving currents corresponding to pulses P to the coils 61c and 62c.

The magnet rotor 31 is rotated by pulses P (pulses P[1] to P[8]) input to the stepping motor 66. Specifically, the magnet rotor 31 is rotated by the driving currents, corresponding to pulses P, supplied to the stator 60 of the stepping motor 66. In this specification, "inputting pulses P to the stepping motor 66" is synonymous with "supplying driving currents corresponding to pulses P to the stator 60 of the stepping motor 66". Pulses P are repeatedly input to the stepping motor 66 in ascending or descending order. In other words, pulses P[1] to P[8] are pulses P for one cycle and are multiple pulses P repeatedly input to the stepping motor 66 in a predetermined order.

In the embodiment, the excitation mode of the stepping motor 66 is 1-2-phase excitation. The step angle of the stepping motor 66 is 3.75 degrees. When the magnet rotor 31 is at the reference position Rx, the movable stopper 32s is in contact with the fixed stopper 33s, thereby restricting the rotation of the magnet rotor 31 in the valve closing direction. The number (an initialization number) of pulses to rotate the magnet rotor 31 from the reference position Rx to the full-open position Rz is 500.

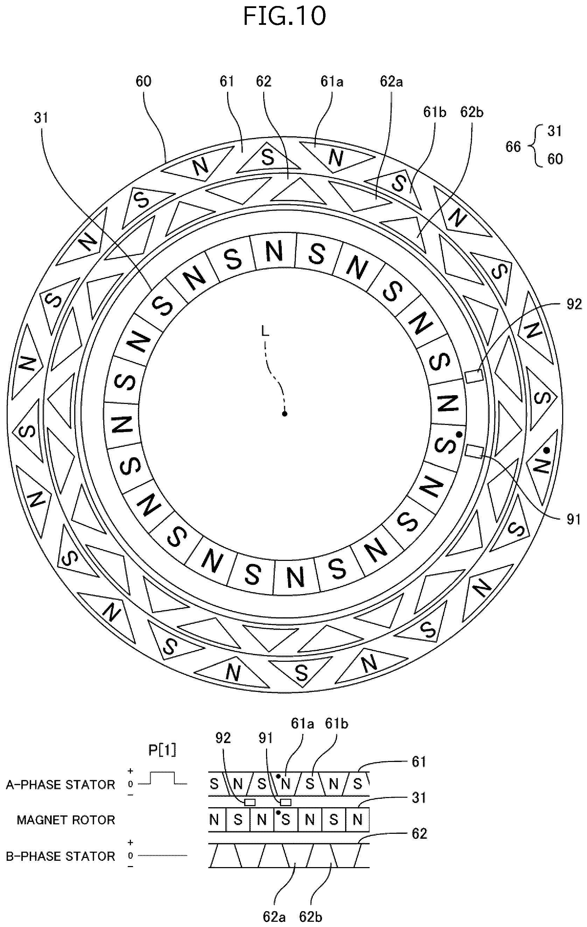

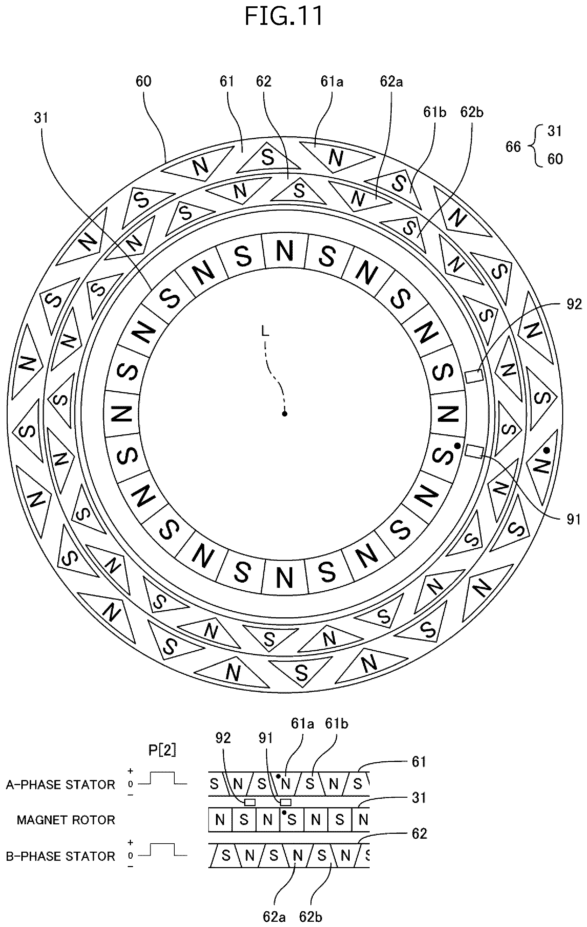

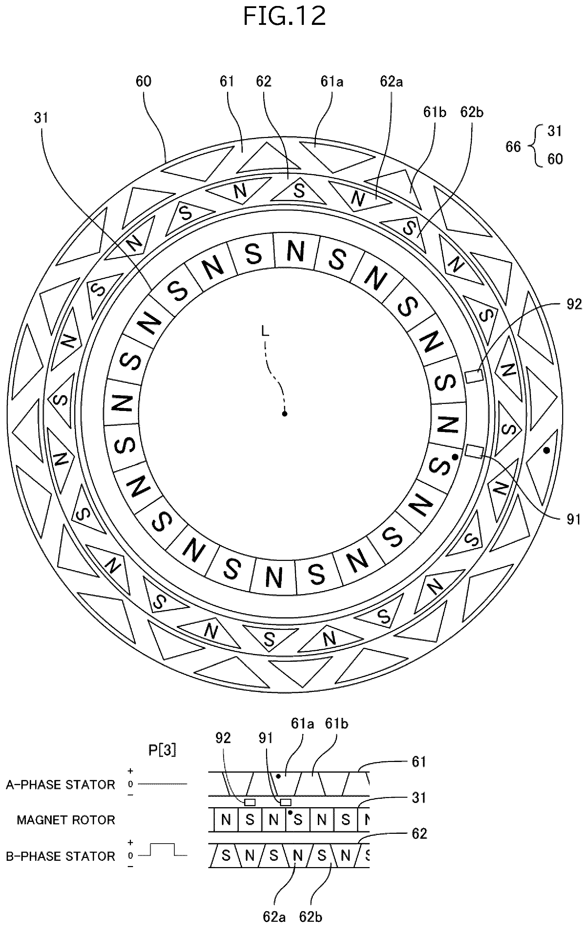

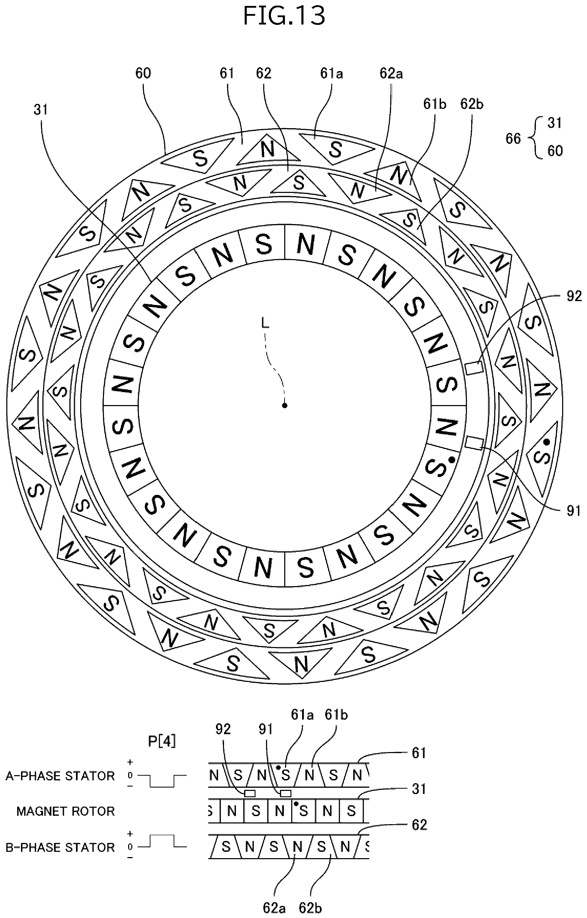

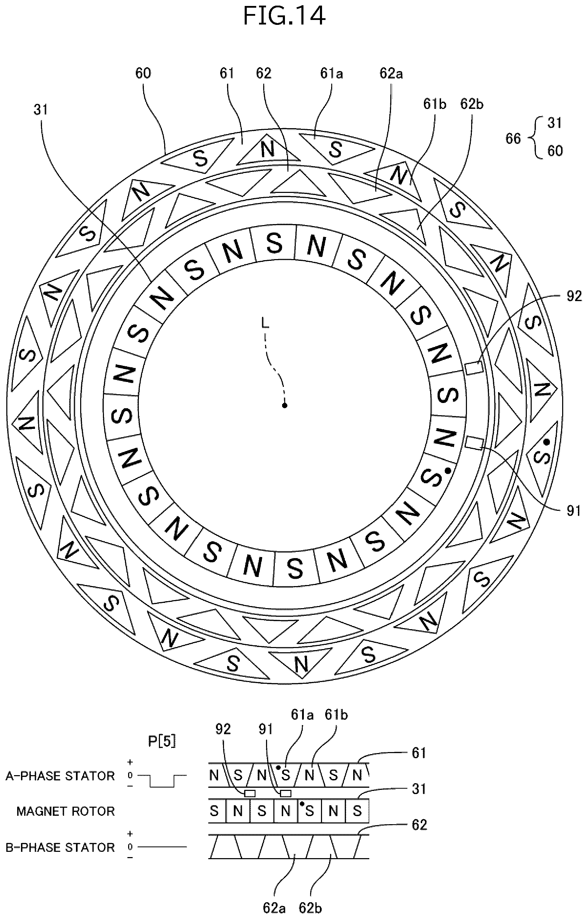

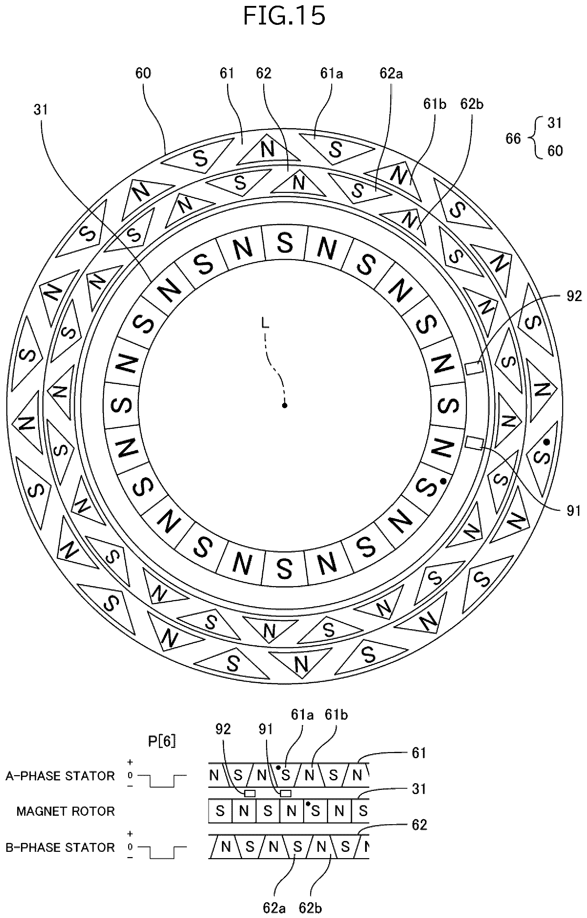

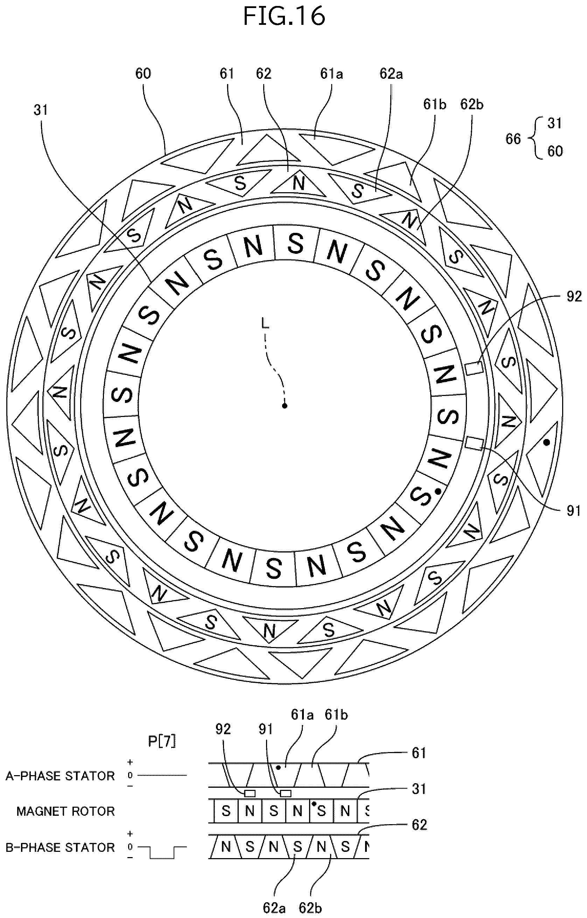

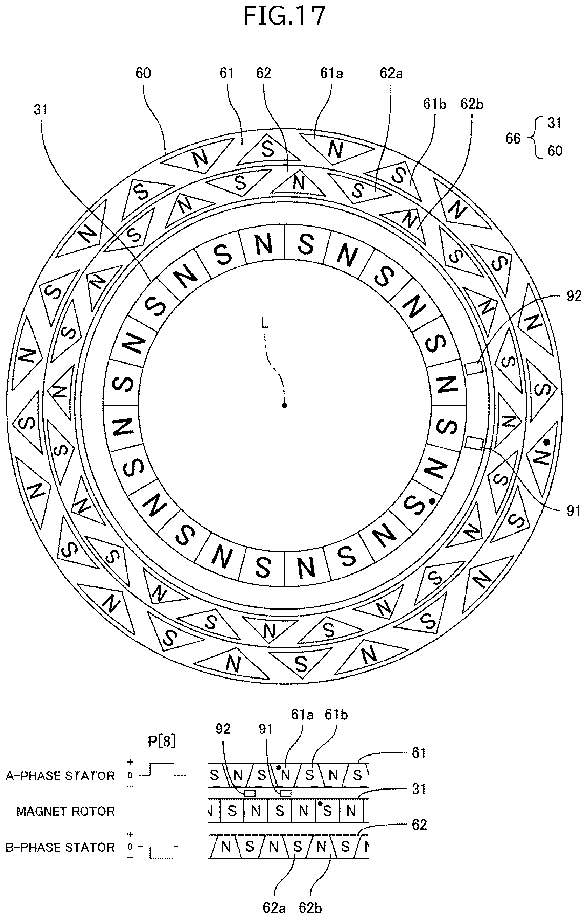

Pulses P[1] to P[8] illustrated in Fig. 9B are input to the stepping motor 66 in order. Figs. 10 to 17 schematically illustrate examples of a positional relationship between the magnet rotor 31 and the stator 60 when pulses P[1] to P[8] are input. Figs. 10 to 17 schematically illustrate the magnetic poles of the magnet rotor 31 and the pole teeth of the stator 60. The radially outward direction in upper diagrams of Figs. 10 to 17 corresponds to the upward direction, and the radially inward direction corresponds to a downward direction. In Figs. 10 to 17, the reference pole tooth 61a and the reference magnetic pole (the S pole) of the magnet rotor 31 are marked with a dot for easy understanding of the positional relationship between the magnet rotor 31 and the stator 60 (the A-phase stator 61 and the B-phase stator 62).

When pulses P are input to the stepping motor 66 in ascending order (in the order from P[1] to P[8]), the magnet rotor 31 rotates in the valve closing direction (clockwise in Figs. 10 to 17). When pulses P are input to the stepping motor 66 in descending order (in the order from P[8] to P[1]), the magnet rotor 31 rotates in the valve opening direction (counterclockwise in Figs. 10 to 17).

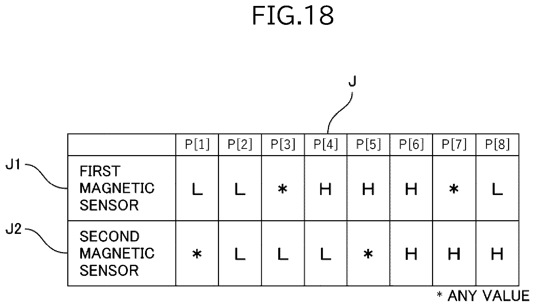

Fig. 18 illustrates an example of output-signal expected value information J (J1 and J2) of the first magnetic sensor 91 and the second magnetic sensor 92. The output-signal expected value information J serves as expected values of the output signals K of the first magnetic sensor 91 and the second magnetic sensor 92 when pulses P[1] to P[8] are input to the stepping motor 66. The output-signal expected value information J is stored in the non-volatile memory 122. In Fig. 18, 'L' indicates the L signal, 'H' indicates the H signal, and '*' indicates that either 'L' or 'H' (any value) is acceptable. In the electric valve 5, due to factors such as tolerance, either 'L' or 'H' is output at a timing corresponding to '*'. The output-signal expected value information J1 of the first magnetic sensor 91 is illustrated in the upper part of Fig. 18. The output-signal expected value information J2 of the second magnetic sensor 92 is illustrated in the lower part of Fig. 18.

The expected values of the output signals K of the first magnetic sensor 91 and the second magnetic sensor 92 when pulse P[1] is input to the stepping motor 66 are 'L' and '*'.

The expected values of the output signals K of the first magnetic sensor 91 and the second magnetic sensor 92 when pulse P[2] is input to the stepping motor 66 are 'L' and 'L'.

The expected values of the output signals K of the first magnetic sensor 91 and the second magnetic sensor 92 when pulse P[3] is input to the stepping motor 66 are '*' and 'L'.

The expected values of the output signals K of the first magnetic sensor 91 and the second magnetic sensor 92 when pulse P[4] is input to the stepping motor 66 are 'H' and 'L'.

The expected values of the output signals K of the first magnetic sensor 91 and the second magnetic sensor 92 when pulse P[5] is input to the stepping motor 66 are 'H' and '*'.

The expected values of the output signals K of the first magnetic sensor 91 and the second magnetic sensor 92 when pulse P[6] is input to the stepping motor 66 are 'H' and 'H'.

The expected values of the output signals K of the first magnetic sensor 91 and the second magnetic sensor 92 when pulse P[7] is input to the stepping motor 66 are '*' and 'H'.

The expected values of the output signals K of the first magnetic sensor 91 and the second magnetic sensor 92 when pulse P[8] is input to the stepping motor 66 are 'L' and 'H'.

In the embodiment, when the magnet rotor 31 rotates in the valve closing direction, the first magnetic sensor 91 outputs "LLHHHHLL" as the output signal K1, and the second magnetic sensor 92 outputs "LLLLHHHH" as the output signal K2, in correspondence with pulses P[1] to P[8] being input. When the magnet rotor 31 rotates in the valve opening direction, the first magnetic sensor 91 outputs "LLHHHHLL", and the second magnetic sensor 92 outputs "HHHHLLLL", in correspondence with pulses P[8] to P[1] being input. The output signals K1 and K2 change according to the rotation of the magnet rotor 31. Consequently, the control device 100 can detect the position and the rotation direction of the magnet rotor 31 using the output signals K1 and K2. The position of the magnet rotor 31 corresponds to, for example, the rotation angle of the magnet rotor 31 from the reference position Rx.

When the output signals K of the first magnetic sensor 91 and the second magnetic sensor 92 match the output-signal expected value information J, the magnet rotor 31 is rotating. When at least one of the output signals K of the first magnetic sensor 91 and the second magnetic sensor 92 does not match the output-signal expected value information J, the magnet rotor 31 is not rotating.

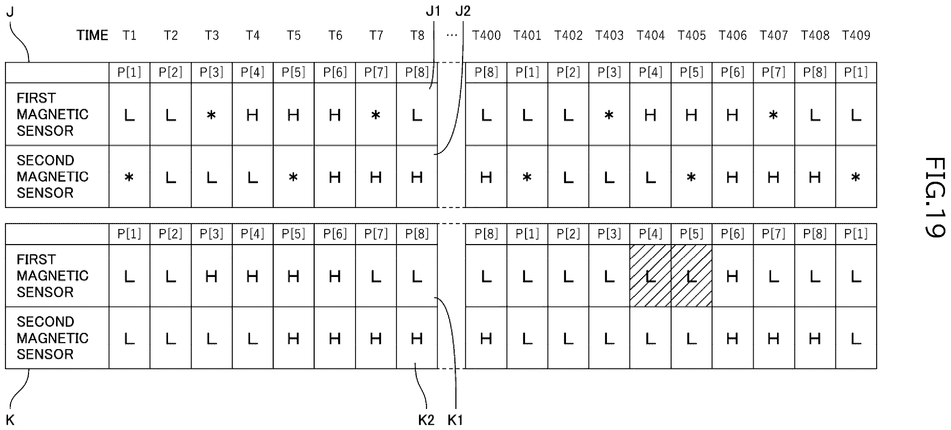

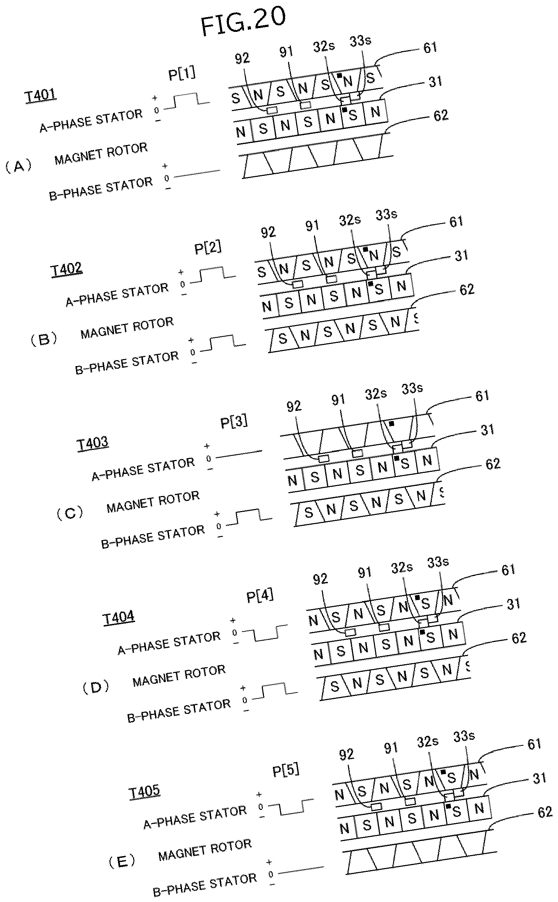

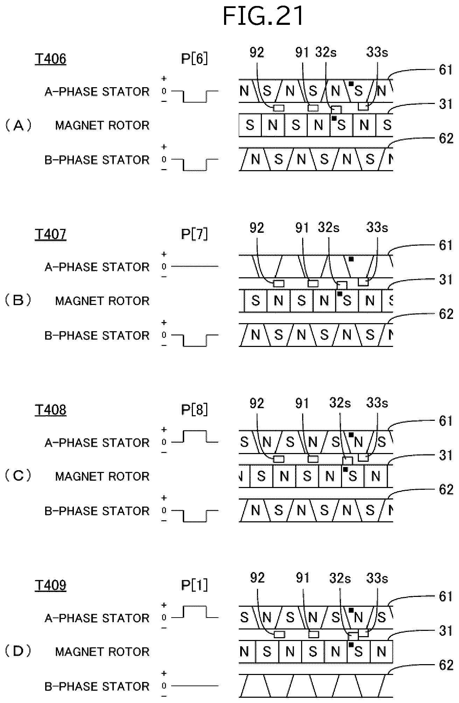

The output signals K of the first magnetic sensor 91 and the second magnetic sensor 92 when the magnet rotor 31 rotates in the valve closing direction in the electric valve device 1 are described below with reference to Figs. 19 to 21. Fig. 19 is a diagram illustrating an example of the output-signal expected value information J and the output signals K at times T1 to T409. Figs. 20 and 21 are diagrams illustrating the movement of the magnet rotor 31 in a state where the rotation of the magnet rotor 31 in the valve closing direction is restricted. In Figs. 20 and 21, the reference pole tooth 61a and the reference magnetic pole (the S pole) of the magnet rotor 31 are marked with a black square for easy understanding of the positional relationship between the magnet rotor 31 and the stator 60 (the A-phase stator 61 and the B-phase stator 62). In Figs. 20 and 21, the right direction corresponds to the valve closing direction, and the left direction corresponds to the valve opening direction. Figs. 20A to 20E and 21A to 21D correspond to times T401 to T409 in Fig. 19.

When the control device 100 repeatedly inputs pulses P to the stepping motor 66 in ascending order at regular time intervals (times T1 to T400), the magnet rotor 31 rotates in the valve closing direction by the step angle with each pulse. When the control device 100 inputs pulse P[1] to the stepping motor 66 at time T401, as illustrated in Fig. 20A, the magnet rotor 31 is positioned at the reference position Rx, and the movable stopper 32s comes into contact with the fixed stopper 33s. The rotation of the magnet rotor 31 in the valve closing direction is restricted at the reference position Rx. As illustrated in Fig. 19, the magnet rotor 31 rotates in the valve closing direction after each pulse P is input from times T1 to T401, and the output signals K match the output-signal expected value information J.

When the control device 100 inputs pulses P[2], P[3], P[4], and P[5] to the stepping motor 66 at times T402, T403, T404, and T405, as illustrated in Figs. 20B to 20E, the magnet rotor 31 does not rotate in the valve closing direction, and the output signals K do not change. Thus, as illustrated in Fig. 19, the output signals K match the output-signal expected value information J after each pulse P is input at times T402 and T403 but do not match the output-signal expected value information J after each pulse P is input at times T404 and T405. Specifically, the output signal K1 does not match the output-signal expected value information J1. In Fig. 19, hatched areas represent some of the output signals K that do not match the output-signal expected value information J.

When the control device 100 inputs pulse P[6] to the stepping motor 66 at time T406, as illustrated in Fig. 20A, the magnet rotor 31 rotates in the valve opening direction. The rotation angle of the magnet rotor 31 is three times the step angle. The output signals K become values corresponding to pulse P[6]. Thus, as illustrated in Fig. 19, the output signals K after pulse P is input at time T406 match the output-signal expected value information J.

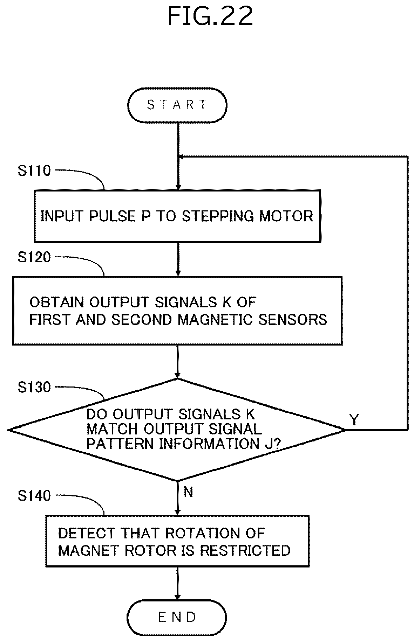

When the control device 100 inputs pulses P[7], P[8], and P[1] to the stepping motor 66 at times T407, T408, and T409, as illustrated in Figs. 21B to 21D, the magnet rotor 31 rotates in the valve closing direction by the step angle with each pulse. Thus, as illustrated in Fig. 22, the output signals K after each pulse P is input at times T407, T408, and T409 match the output-signal expected value information J. The magnet rotor 31 is positioned at the reference position Rx again after pulse P is input at the T409, and the rotation of the magnet rotor 31 in the valve closing direction is restricted by the stopper mechanism 38.

After that, the output signals K repeatedly change in the same manner as times T401 to T408 in response to pulses P[1] to P[8] being input.

The control device 100 inputs pulses P to the stepping motor 66 in ascending order, as described above. When the control device 100 inputs pulses P to the stepping motor 66 in descending order and the rotation of the magnet rotor 31 in the valve opening direction is restricted, the output signals K change in the same manner as described above.

Therefore, the control device 100 can determine whether the magnet rotor 31 is rotating by comparing the output signals K of the first magnetic sensor 91 and the second magnetic sensor 92 obtained after each pulse P is input with the output-signal expected value information J. The control device 100 can detect that the rotation of the magnet rotor 31 is restricted, based on the determination.

An example of a process of the control device 100 for positioning the magnet rotor 31 at the reference position Rx is described below with reference to a flowchart in Fig. 22.

The control device 100 (specifically, the CPU 121) inputs pulse P to the stepping motor 66 in ascending order (S110). The control device 100 obtains the output signals K of the first magnetic sensor 91 and the second magnetic sensor 92 (S120). The control device 100 reads the output-signal expected value information J, corresponding to pulse P being input, from the non-volatile memory 122 to compare the output signals K with the output-signal expected value information J (S130). When the output signals K match the output-signal expected value information J (Y in S130), the control device 100 determines that the magnet rotor 31 is rotating and inputs next pulse P (return to S110). When the output signals K do not match the output-signal expected value information J (N in S130), the control device 100 determines that the magnet rotor 31 is not rotating and detects that the rotation of the magnet rotor 31 in the valve closing direction is restricted (S140). As a result, the control device 100 determines that the magnet rotor 31 is positioned at the reference position Rx and finishes the process.

The control device 100 can detect that the rotation of the magnet rotor 31 in the valve closing direction is restricted by the stopper mechanism 38. Additionally, the control device 100 can detect, for example, that the rotation of the magnet rotor 31 is restricted due to foreign matters contained in refrigerant.

In the electric valve 5, types of rotation restriction of the magnet rotor 31 include (i) rotation restriction by the stopper mechanism 38, (ii) rotation restriction due to valve lock, and (iii) rotation restriction due to rotor lock. In type (i), when the magnet rotor 31 is at the reference position Rx, the movable stopper 32s is in contact with the fixed stopper 33s, restricting the rotation of the magnet rotor 31 in the valve closing direction. In type (ii), foreign matter lodged between the valve port 17 and the valve member 40 prevents the valve member 40 from moving, restricting the rotation of the magnet rotor 31. In type (iii), foreign matter lodged between the inner circumferential surface of the can 20 and the outer circumferential surface of the magnet rotor 31 restricts the rotation of the magnet rotor 31.

In type (i), the magnet rotor 31 can rotate in the valve opening direction. In type (ii), the magnet rotor 31 can rotate by an angle corresponding to the play between the internal thread 32c of the valve stem holder 32 and the external thread 33c of the guide bush 33. In types (i) and (ii), when pulses P are sequentially input to rotate the magnet rotor 31 in one direction (the valve closing direction or the valve opening direction) and continue to be input even after the rotation of the magnet rotor 31 is restricted, the magnet rotor 31 repeatedly exhibits a movement in which the magnet rotor 31 temporarily rotates in the opposite direction before resuming its original rotation. This movement is referred to as "a reverse rotation movement".

In type (iii), the magnet rotor 31 cannot rotate in any direction. In type (iii), when pulses P are sequentially input to rotate the magnet rotor 31 in one direction (the valve closing direction or the valve opening direction) and continue to be input even after the rotation of the magnet rotor 31 is restricted, the magnet rotor 31 does not rotate in any direction.

Consequently, upon detecting the rotation restriction of the magnet rotor 31, the control device 100 can determine that the rotation restriction corresponds to type (i) or (ii) when the magnet rotor 31 exhibits the reverse rotation movement and to type (iii) when the magnet rotor 31 does not exhibit the reverse rotation movement. The control device 100 may be configured to send a malfunction alert for the electric valve 5 to the air conditioner control device 410 when the rotation restriction of the magnet rotor 31 corresponds to type (iii) and is not eliminated even though an attempt is made to rotate the magnet rotor 31 in the opposite direction.

The electric valve device 1 according to the embodiment includes the electric valve 5 and the control device 100. The electric valve 5 includes the valve body 10 that has the valve port 17, the valve member 40 that faces the valve port 17, the can 20 that is bonded to the valve body 10, the stepping motor 66 for moving the valve member 40, the first magnetic sensor 91, and the second magnetic sensor 92. The stepping motor 66 includes the magnet rotor 31 that has a circular cylindrical shape and is disposed inside the can 20 and the stator 60 that is disposed outside the can 20. The N poles and the S poles are alternately arranged on the outer circumferential surface of the magnet rotor 31 at regular intervals in the circumferential direction. The first magnetic sensor 91 and the second magnetic sensor 92 are disposed outside the can 20 and are radially positioned relative to the magnet rotor 31. Where n represents the total number of the N poles and the S poles, N represents a natural number, and θ represents the angle between the line M1 connecting the axis L (the axis of the magnet rotor 31) to the first magnetic sensor 91 and the line M2 connecting the axis L to the second magnetic sensor 92, the following expression (1) is satisfied.

$$(1) \quad \theta = (360/n) \times N + (360/2n)$$

The output signals K of the first magnetic sensor 91 and the second magnetic sensor 92 are each a binary signal. The control device 100 detects that the rotation of the magnet rotor 31 is restricted using the output signals K and the output-signal expected value information J.

With this configuration, whether the magnet rotor 31 is rotating can be determined by comparing the output signals K of the first magnetic sensor 91 and the second magnetic sensor 92 with the output-signal expected value information J serving as the expected values of these signals. Therefore, it can be detected in a relatively simple way that the rotation of the magnet rotor 31 is restricted, based on the determination of the rotation of the magnet rotor 31.

The control device 100 may be configured to detect the rotation direction of the magnet rotor 31 using the output signals K of the first magnetic sensor 91 and the second magnetic sensor 92.

For example, as illustrated in Fig. 19, the magnet rotor 31 rotates in the valve closing direction when the control device 100 inputs pulses P to the stepping motor 66 in ascending order. The output signal K1 of the first magnetic sensor 91 changes from 'L' to 'H' in response to pulses P[2], P[3], and P[4] being input, and the output signal K2 of the second magnetic sensor 92 changes from 'L' to 'H' in response to pulses P[4], P[5], and P[6] being input.

Alternatively, the magnet rotor 31 rotates in the valve opening direction when the control device 100 inputs pulses P to the stepping motor 66 in descending order. The output signal K2 of the second magnetic sensor 92 changes from 'L' to 'H' in response to pulses P[2], P[1], and P[8] being input, and the output signal K1 of the first magnetic sensor 91 changes from 'L' to 'H' in response to pulses P[8], P[7], and P[6] being input.

In other words, when the magnet rotor 31 rotates in the valve closing direction, the output signal K of the first magnetic sensor 91 changes from 'L' to 'H', followed by the output signal K of the second magnetic sensor 92 changing from 'L' to 'H'. When the magnet rotor 31 rotates in the valve opening direction, the output signal K of the second magnetic sensor 92 changes from 'L' to 'H', followed by the output signal K of the first magnetic sensor 91 changing from 'L' to 'H'.

Therefore, the control device 100 can detect, in a relatively simple way, the rotation direction of the magnet rotor 31 using timing when the output signal K of the first magnetic sensor 91 changes from the L signal (the first value) to the H signal (the second value) and timing when the output signal K of the second magnetic sensor 92 changes from the L signal (the first value) to the H signal (the second value). The L and H signals may be assigned as the second and first values, respectively.

The output signal K1 of the first magnetic sensor 91 and the output signal K2 of the second magnetic sensor 92 change according to the rotation of the magnet rotor 31. Therefore, the control device 100 can detect the position (the rotation angle from the reference position Rx) and the rotation direction of the magnet rotor 31 using the output signals K1 and K2. The control device 100 may detect that the rotation of the magnet rotor 31 is restricted using the position or the rotation direction of the magnet rotor 31.

In the embodiment, the control device 100 is configured to control the electric valve 5. However, the air conditioner control device 410 may be configured to directly control the electric valve 5. In this configuration, the air conditioner control device 410 serves as an electric valve control device.

In this specification, the terms indicating shapes of members, such as "circular cylindrical" and "circular columnar", are also used for members substantially having the shapes indicated by the terms. For example, "circular cylindrical member" includes a circular cylindrical member and a substantially circular cylindrical member.

The embodiment of the present invention is described above. The present invention, however, is not limited to the embodiment. Embodiments obtained by a person skilled in the art appropriately adding, removing, or modifying components according to the embodiment described above, and an embodiment obtained by appropriately combining features of the embodiment are included in the scope of the present invention without departing from the spirit of the present invention.

Reference Signs List

1 ... electric valve device, 5 ... electric valve, 10 ... valve body, 11 ... body member, 11a ... mounting hole, 11b ... upper surface, 12 ... supporting member, 12a ... fitting hole, 13 ... connection member, 14 ... valve chamber, 15, 16 ... flow channel, 17 ... valve port, 18 ... valve seat, 20 ... can, 30 ... driving mechanism, 31 ... magnet rotor, 32 ... valve stem holder, 32c ... internal thread, 32s **...** movable stopper, 33 **...** guide bush, 33a ... first circular cylindrical portion, 33b ... second circular cylindrical portion, 33c ... external thread, 33s ... fixed stopper, 34 ... valve stem, 34a ... first part, 34b ... second part, 34d ... step portion, 35 ... supporting ring, 36 ... push nut, 37 ... valve closing spring, 38 ... stopper mechanism, 40 ... valve member, 50 ... stator unit, 60 ... stator, 61 ... A-phase stator, 61a, 61b ... pole tooth, 61c ... coil, 62 ... B-phase stator, 62a, 62b ... pole tooth, 62c ... coil, 65 ... terminal, 66 ... stepping motor, 70 ... housing, 74 ... inner space, 75 ... circuit board space, 76 ... partition wall, 80 ... case, 80a ... opening, 83 ... connector, 85 ... space, 87 ... boss, 90 ... sensor circuit board, 90a ... first end, 90b ... second end, 93 ... connecting terminal, 95 ... circuit-board supporting member, 97 ... circular cylindrical portion, 91 ... first magnetic sensor, 92 ... second magnetic sensor, 100 ... electric valve control device, 110 ... control circuit board, 112 ... through hole, 120 ... microcomputer, 121 ... CPU, 122 ... non-volatile memory, 123 ... motor driver, 124 ... working memory, 125 ... communication module, L ... axis, J, J1, J2 ... output-signal expected value information, K, K1, K2 ... output signal

**Claims**

1. An electric valve control device for controlling an electric valve,

    wherein the electric valve includes a valve body that has a valve port, a valve member that faces the valve port, a can that is bonded to the valve body, a stepping motor for moving the valve member, and a first magnetic sensor and a second magnetic sensor that are disposed outside the can,
    wherein the stepping motor includes a magnet rotor that has a circular cylindrical shape and is disposed inside the can and a stator that is disposed outside the can,
    wherein north poles and south poles are alternately arranged on an outer circumferential surface of the magnet rotor at regular intervals in a circumferential direction,
    wherein where n represents a total number of the north poles and the south poles, N represents a natural number, and θ represents an angle, as viewed in a direction of an axis of the magnet rotor, between a line connecting the axis to the first magnetic sensor and a line connecting the axis to the second magnetic sensor, a following expression (1) is satisfied,

    $$(1)\ \theta = (360/n) \times N + (360/2n),$$

    wherein an output signal of the first magnetic sensor and an output signal of the second magnetic sensor are each a binary signal, and
wherein the electric valve control device is configured to detect that rotation of the magnet rotor is restricted using the output signal of the first magnetic sensor and the output signal of the second magnetic sensor and output-signal expected value information that serves as expected values of the output signal of the first magnetic sensor and the output signal of the second magnetic sensor while the magnet rotor rotates.

2. The electric valve control device according to Claim 1,
wherein the electric valve control device is configured to detect rotation direction of the magnet rotor using timing when the output signal of the first magnetic sensor changes from a first value to a second value and timing when the output signal of the second magnetic sensor changes from the first value to the second value.

3. An electric valve control device for controlling an electric valve,

wherein the electric valve includes a valve body that has a valve port, a valve member that faces the valve port, a can that is bonded to the valve body, a stepping motor for moving the valve member, and a first magnetic sensor and a second magnetic sensor that are disposed outside the can,
wherein the stepping motor includes a magnet rotor that has a circular cylindrical shape and is disposed inside the can and a stator that is disposed outside the can,
wherein north poles and south poles are alternately arranged on an outer circumferential surface of the magnet rotor at regular intervals in a circumferential direction, and
wherein the electric valve control device is configured to detect position and rotation direction of the magnet rotor using an output signal of the first magnetic sensor and an output signal of the second magnetic sensor.

4. An electric valve device comprising: the electric valve; and the electric valve control device according to any one of Claims 1 to 3.

# FIG.1

# FIG.2

# FIG.3

# FIG.4

# FIG.5

FIG.6

# FIG.7

# FIG.8

# FIG.9

(A)

| | P[1] | P[2] | P[3] | P[4] | P[5] | P[6] | P[7] | P[8] | NOTE |
|---|---|---|---|---|---|---|---|---|---|
| A-PHASE STATOR | + | + | O | − | − | − | O | + | + : A1→A2<br>0 : OFF<br>− : A2→A1 |
| B-PHASE STATOR | O | + | + | + | O | − | − | − | + : B1→B2<br>0 : OFF<br>− : B2→B1 |

(B)

# FIG.10

# FIG.11

# FIG.12

# FIG.13

| | P[4] | | | | | | | | | | | |
|---|---|---|---|---|---|---|---|---|---|---|---|---|
| A-PHASE STATOR | | N | S | N | S | N | S | N | | | 61 | |
| | | | | | | | | | | 31 | | |
| MAGNET ROTOR | | S | N | S | N | S | N | S | | | | |
| B-PHASE STATOR | | S | N | S | N | S | N | S | | | 62 | |

# FIG.14

# FIG.15

| | P[6] | | | 92 | 91 | 61a | 61b | |
|---|---|---|---|---|---|---|---|---|
| A-PHASE STATOR | | | N | S | N | S | N | S | N | — 61 |
| MAGNET ROTOR | | | S | N | S | N | S | N | S | — 31 |
| B-PHASE STATOR | | | N | S | N | S | N | S | N | — 62 |

62a  62b

# FIG.16

P[7]

A-PHASE STATOR

MAGNET ROTOR

B-PHASE STATOR

# FIG.17

# FIG.18

|  |  | P[1] | P[2] | P[3] | P[4] | P[5] | P[6] | P[7] | P[8] |
|---|---|---|---|---|---|---|---|---|---|
| J1 | FIRST MAGNETIC SENSOR | L | L | * | H | H | H | * | L |
| J2 | SECOND MAGNETIC SENSOR | * | L | L | L | * | H | H | H |

* ANY VALUE

FIG.19

| TIME | T1 | T2 | T3 | T4 | T5 | T6 | T7 | T8 | ··· | T400 | T401 | T402 | T403 | T404 | T405 | T406 | T407 | T408 | T409 |
|---|---|---|---|---|---|---|---|---|---|---|---|---|---|---|---|---|---|---|---|
| | P[1] | P[2] | P[3] | P[4] | P[5] | P[6] | P[7] | P[8] | | P[8] | P[1] | P[2] | P[3] | P[4] | P[5] | P[6] | P[7] | P[8] | P[1] |
| FIRST MAGNETIC SENSOR | L | L | * | H | H | H | * | L | | L | L | L | * | H | H | H | * | L | L |
| SECOND MAGNETIC SENSOR | * | L | L | L | * | H | H | H | | H | * | L | L | L | * | H | H | H | * |

J, J1, J2

| | P[1] | P[2] | P[3] | P[4] | P[5] | P[6] | P[7] | P[8] | | P[8] | P[1] | P[2] | P[3] | P[4] | P[5] | P[6] | P[7] | P[8] | P[1] |
|---|---|---|---|---|---|---|---|---|---|---|---|---|---|---|---|---|---|---|---|
| FIRST MAGNETIC SENSOR | L | L | H | H | H | H | L | L | | L | L | L | L | L | L | H | L | L | L |
| SECOND MAGNETIC SENSOR | L | L | L | L | H | H | H | H | | H | L | L | L | L | L | H | H | H | L |

K, K2, K1

32

# FIG.20

# FIG.21

T406      P[6]     92   91 32s    33s

(A)

A-PHASE STATOR

MAGNET ROTOR

B-PHASE STATOR

T407      P[7]     92   91 32s    33s

(B)

A-PHASE STATOR

MAGNET ROTOR

B-PHASE STATOR

T408      P[8]     92   91 32s    33s

(C)

A-PHASE STATOR

MAGNET ROTOR

B-PHASE STATOR

T409      P[1]     92   91 32s    33s

(D)

A-PHASE STATOR

MAGNET ROTOR

B-PHASE STATOR

# FIG.22

```
                    ┌─────────────┐
                    │   START     │
                    └──────┬──────┘
                           │
                           ▼
S110 ──      ┌────────────────────────────────────┐
             │  INPUT PULSE P TO STEPPING MOTOR    │
             └──────────────────┬─────────────────┘
                                │
S120 ──      ┌─────────────────▼──────────────────┐
             │  OBTAIN OUTPUT SIGNALS K OF         │
             │  FIRST AND SECOND MAGNETIC SENSORS  │
             └──────────────────┬─────────────────┘
                                │
S130 ──                  ◇──────▼──────◇
                    DO OUTPUT SIGNALS K        Y
                    MATCH OUTPUT SIGNAL ─────────────┐
                    PATTERN INFORMATION J?           │
                           ◇──────◇                  │
                                │ N                  │
S140 ──      ┌──────────────────▼─────────────────┐ │
             │  DETECT THAT ROTATION OF           │ │
             │  MAGNET ROTOR IS RESTRICTED        │ │
             └──────────────────┬─────────────────┘ │
                                │                    │
                                ▼                    │
                         ┌─────────────┐             │
                         │    END      │             │
                         └─────────────┘             │
```

## INTERNATIONAL SEARCH REPORT

International application No.

**PCT/JP2023/018927**

### A. CLASSIFICATION OF SUBJECT MATTER

*F16K 31/04*(2006.01)i; *H02K 37/14*(2006.01)i; *H02P 8/24*(2006.01)i; *F16K 37/00*(2006.01)i
FI:  F16K31/04 A; F16K37/00 D; H02K37/14 535Y; H02P8/24

According to International Patent Classification (IPC) or to both national classification and IPC

### B. FIELDS SEARCHED

Minimum documentation searched (classification system followed by classification symbols)

F16K31/04; H02K37/14; H02P8/24; F16K37/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-110409 A (FUJI KOKI CORP.) 02 August 2021 (2021-08-02) | 3-4 |
|  | paragraphs [0021]-[0061], fig. 1-5 |  |
| A | paragraphs [0021]-[0061], fig. 1-5 | 1-2 |
| A | JP 2021-110395 A (FUJI KOKI CORP.) 02 August 2021 (2021-08-02) | 1-4 |
|  | entire text, all drawings |  |
| A | JP 8-326952 A (NIPPONDENSO CO., LTD.) 10 December 1996 (1996-12-10) | 1-4 |
|  | entire text, all drawings |  |
| A | JP 2001-12633 A (FUJI KOKI CORP.) 16 January 2001 (2001-01-16) | 1-4 |
|  | entire text, all drawings |  |
| A | JP 2003-329698 A (KABUSHIKI KAISHA SAGINOMIYA SEISAKUSHO) 19 November 2003 (2003-11-19) | 1-4 |
|  | entire text, all drawings |  |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 August 2023** | **08 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/018927**

| Patent document cited in search report | | | Publication date (day/month/year) | Patent family member(s) | | | Publication date (day/month/year) |
|---|---|---|---|---|---|---|---|
| JP | 2021-110409 | A | 02 August 2021 | WO | 2021/145242 | A1 | |
| | | | | CN | 114901977 | A | |
| JP | 2021-110395 | A | 02 August 2021 | EP | 4089306 | A1 | |
| | | | | entire text, all drawings | | | |
| | | | | KR | 10-2022-0080187 | A | |
| | | | | CN | 114901978 | A | |
| | | | | WO | 2021/141033 | A1 | |
| JP | 8-326952 | A | 10 December 1996 | (Family: none) | | | |
| JP | 2001-12633 | A | 16 January 2001 | (Family: none) | | | |
| JP | 2003-329698 | A | 19 November 2003 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003329698 A